(19) Europäisches Patentamt
European Patent Office
Office européen des brevets

(11) EP 4 468 437 A1

# (12) EUROPEAN PATENT APPLICATION

(43) Date of publication:
**27.11.2024 Bulletin 2024/48**

(21) Application number: **24177265.6**

(22) Date of filing: **22.05.2024**

(51) International Patent Classification (IPC):
***H01M 10/0525*** *(2010.01)* ***H01M 10/0567*** *(2010.01)*
*H01M 4/36* *(2006.01)* *H01M 4/38* *(2006.01)*
*H01M 4/525* *(2010.01)* *H01M 10/0569* *(2010.01)*

(52) Cooperative Patent Classification (CPC):
**H01M 10/0567; H01M 10/0525;** H01M 4/366; H01M 4/386; H01M 4/525; H01M 10/0569; H01M 2300/0025; H01M 2300/0028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 KR 20230065731**

(71) Applicant: **Samsung SDI Co., Ltd.**
**Yongin-si, Gyeonggi-do 17084 (KR)**

(72) Inventors:
- **Lim, Jin-Hyeok**
  **17084 Yongin-si, Gyeonggi-do (KR)**
- **Seo, Jinah**
  **17084 Yongin-si, Gyeonggi-do (KR)**
- **Koh, Sujeong**
  **17084 Yongin-si, Gyeonggi-do (KR)**
- **Cho, Erang**
  **17084 Yongin-si, Gyeonggi-do (KR)**
- **Kim, Yunhee**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

## (54) ELECTROLYTE FOR RECHARGEABLE LITHIUM BATTERY AND RECHARGEABLE LITHIUM BATTERY INCLUDING THE SAME

(57) Examples of this disclosure relate to an electrolyte for a rechargeable lithium battery, and a rechargeable lithium battery including the same, the electrolyte including a non-aqueous organic solvent, a lithium salt, and a potassium imide salt.

【FIG. 1】

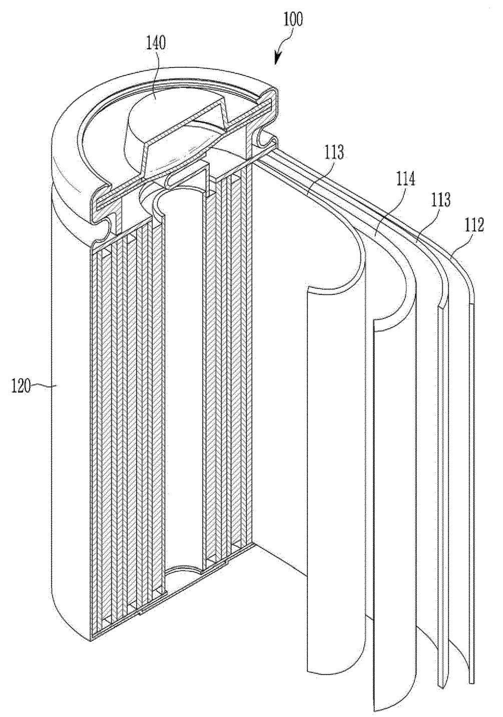


EP 4 468 437 A1

## Description

## BACKGROUND OF THE INVENTION

### (a) Field of the Invention

Examples of this disclosure relate to an electrolyte for a rechargeable lithium battery, and a rechargeable lithium battery including the same.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. A rechargeable lithium battery may be also charged at a high rate and thus, may be commercially manufactured for a laptop, a cell phone, an electric tool, an electric bike, and the like, and research on improvement of additional energy density is being actively pursued.

Such a rechargeable lithium battery is used by injecting an electrolyte into a battery cell including a positive electrode that has a positive electrode active material that can intercalate and de-intercalate lithium, and a negative electrode that has a negative electrode active material that can intercalate and de-intercalate lithium.

One of the recent development directions of a rechargeable lithium battery relates to high-rate charging. However, the high-rate charging of the rechargeable lithium battery may present challenges of deteriorating lifecycle characteristics and/or an increase in resistance due to lithium dendrite precipitated on the negative electrode surface (for example, on the interface of the negative electrode with the electrolyte).

Accordingly, an electrolyte that may improve the high-rate charging performance as well as reduce or minimize the deterioration of lifecycle characteristics and/or the increase in resistance of the rechargeable lithium battery may be advantageous.

## SUMMARY OF THE INVENTION

The invention is defined by the appended claims. The description that follows is subjected to this limitation. Any disclosure lying outside the scope of said claims is only intended for illustrative as well as comparative purposes. Some example embodiments provide an electrolyte for a rechargeable lithium battery that improves high-rate charging performance while reducing or minimizing deterioration of lifecycle characteristics and/or increase in resistance.

Some example embodiments provide a rechargeable lithium battery with improved high-rate charging performance while reducing or minimizing deterioration of lifecycle characteristics and/or increase in resistance by using the electrolyte for a rechargeable lithium battery.

The present invention provides an electrolyte for a rechargeable lithium battery including a non-aqueous organic solvent, a lithium salt, and a potassium imide salt.

In various examples, the potassium imide salt content may be or include 0.15 to 1.0 wt% based on 100 wt% of the electrolyte for a rechargeable lithium battery.

In other examples, the potassium imide salt content may be 0.2 to 0.3 wt% based on 100 wt% of the electrolyte for a rechargeable lithium battery.

For example, the potassium imide salt may be or include KFSI (potassium bis(fluorosulfonyl)imide), KTFSI (potassium bis(trifluoromethanesulfonyl)imide), KFTFSI (potassium (fluorosulfonyl) (trifluoromethanesulfonyl)imide), or a combination thereof.

The non-aqueous organic solvent may include a carbonate-based, ester-based, ether-based, ketone-based, alcohol-based, or aprotic solvent.

The non-aqueous organic solvent may include a carbonate-based solvent in which cyclic carbonate and chain carbonate are mixed in a volume ratio of 5:95 to 50:50.

The cyclic carbonate may include ethylene carbonate (EC), and the chain carbonate may include ethylmethyl carbonate (EMC) and dimethyl carbonate (DMC).

The lithium salt may include at least one selected from $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ ((lithium bis(fluorosulfonyl)imide: LiFSI), $LiC_4F_9SO_3$, $LiClO_4$, $LiAlO_2$, $LiAlCl_4$, $LiN(C_mF_{2m+1}SO_2)(C_nF_{2n+1}SO_2)$, wherein, m and n are each independently integers from 1 to 20, LiCl, LiI, and $LiB(C_2O_4)_2$ (lithium bis(oxalato) borate: LiBOB).

A concentration of lithium salt in the electrolyte for a rechargeable lithium battery may be 1.0 M to 2.0 M.

A rechargeable lithium battery includes a positive electrode having a positive electrode active material, a negative electrode having a negative electrode active material, and the electrolyte.

The positive electrode active material may include a lithium nickel-based composite oxide represented by Chemical Formula 1:

[Chemical Formula 1] $Li_{a1}Ni_{x1}M^1_{y1}M^2_{z1}O_{2-b1}X_{b1}$

In Chemical Formula 1,
$0.9 \leq a1 \leq 1.2$, $0.7 \leq x1 \leq 1$, $0 \leq y1 \leq 0.2$, $0 \leq z1 \leq 0.2$, $0.9 \leq x1\ y1\ z1 \leq 1.1$, and $0 \leq b1 \leq 0.1$; $M^1$ and $M^2$ are each independently one or more element selected from Al, B, Ba, Ca, Ce, Co, Cr, Cu, Fe, Mg, Mn, Mo, Nb, Si, Sr, Ti, V, W, and Zr; and X is one or more element selected from F, P, and S.
For example, the negative electrode active material may include at least one of graphite and a Si-C composite.
The Si-C composite may include a core having Si particles and amorphous carbon.
The core including the Si particles may have one or more of Si-C composite, $SiO_k$ ($0 < k \leq 2$), and a Si alloy.
The Si-C composite may include a core having Si particles and amorphous carbon.
The central portion of the core may include pores.
A radius of the central portion may be about 30% to about 50% of a radius of the Si-C composite, and an average particle diameter of the Si particles may be about 10 nm to about 200 nm.
In various examples, the central portion may not include amorphous carbon, and the amorphous carbon may exist only in the surface portion of the negative electrode active material.
The negative electrode active material may further include crystalline carbon.
As the potassium imide salt is added to the electrolyte for a rechargeable lithium battery, a lithiophilic film can be formed on the surface of the negative electrode, and precipitates at the interface between the negative electrode and the electrolyte can be reduced or minimized. As a result, it is possible to implement a rechargeable lithium battery with improved high-rate charging performance while suppressing or reducing deterioration of lifecycle characteristics and/or increase in resistance.

## BRIEF DESCRIPTION OF THE DRAWINGS

FIG. 1 is a schematic view illustrating a rechargeable lithium battery according to some example embodiments.

## DETAILED DESCRIPTION OF THE EMBODIMENTS

Hereinafter, a rechargeable lithium battery according to some example embodiments is described with reference to the accompanying drawings. However, these embodiments are exemplary, the present invention is not limited thereto and example embodiments are defined by the scope of claims.
Herein, as an example of a rechargeable lithium battery, a cylindrical rechargeable lithium battery is described. FIG. 1 schematically illustrates the structure of a rechargeable lithium battery according to some example embodiments. Referring to FIG. 1, a rechargeable lithium battery 100 according to some example embodiments includes a battery cell including a positive electrode 114, a negative electrode 112 facing the positive electrode 114, a separator 113 between the positive electrode 114 and the negative electrode 112, and an electrolyte (not shown) in which the positive electrode 114, the negative electrode 112, and the separator are immersed 113, a battery case 120 housing the battery cell, and a sealing member 140 sealing the battery case 120.
The present invention provides an electrolyte for a rechargeable lithium battery including a non-aqueous organic solvent, a lithium salt, and a potassium imide salt.
When potassium imide salt is added as an additive to the electrolyte of a rechargeable lithium battery, the potassium imide salt simultaneously coexist with the lithium salt in the rechargeable lithium battery. Accordingly, cations (i.e., $K^+$ and $Li^+$) of the two salts may be simultaneously or contemporaneously electrodeposited on the negative electrode surface, forming a lithiophilic film that includes both $K^+$ and $Li^+$ on the negative electrode surface and having a uniform thickness. When potassium imide salt is not added as an additive to the electrolyte of the rechargeable lithium battery, cations of the lithium salt (i.e., Li) may be electrodeposited on the negative electrode surface and may form lithium dendrites, e.g., sharp lithium dendrites, on the negative electrode surface. Formation of the lithium dendrites may damage the lifecycle and safety of the rechargeable lithium battery.
The lithiophilic film including both $K^+$ and $Li^+$ on the negative electrode surface and having a uniform thickness may suppress or reduce the formation of the sharp lithium dendrite and may also reduce or minimize the formation of precipitates on the interface between the negative electrode and the electrolyte. In addition, a resistance increase rate of the negative electrode may be lowered.
Furthermore, the potassium imide salt, compared with a potassium phosphate salt, has the desired or advantageous effect of forming the lithiophilic film. Specifically, the potassium imide salt includes an electron donating group, compared with a sodium phosphate salt not including the corresponding group, exhibits a desired or advantageous

effect of stabilizing phosphorus pentafluoride (PF) and the like.

Based on 100 wt% of the electrolyte for a rechargeable lithium battery, a content of the potassium imide salt may be 0.15 wt% to 1.0 wt%, and for example, 0.2 wt% to 0.5 wt%, or 0.2 wt% to 0.3 wt%.

When the content of the potassium imide salt satisfies the above-discussed example ranges, the lithiophilic film is formed at a desired level on the negative electrode surface and thus may reduce or minimize the formation of precipitates on the interface of the negative electrode with the electrolyte. Accordingly, a rechargeable lithium battery exhibiting improved high-rate charging performance as well as suppressed or reduced deterioration of lifecycle characteristics such as duration and performance, and/or suppressed or reduced increase in resistance may be realized.

The potassium imide salt may include, e.g., KFSI (potassium bis(fluorosulfonyl)imide), KTFSI (potassium bis (trifluoromethanesulfonyl) imide), KFTFSI (potassium (fluorosulfonyl) (trifluoromethanesulfonyl) imide), or a combination thereof. For example, the potassium imide salt may be or include any one of the above-discussed three types of compounds.

The non-aqueous organic solvent in the electrolyte constitutes a medium for transmitting ions taking part in the electrochemical reaction of a battery.

For example, the non-aqueous organic solvent may include a carbonate-based, ester-based, ether-based, ketone-based, alcohol-based, or aprotic solvent.

The carbonate-based solvent may include, e.g., ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethylpropionate, propylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent may include, e.g., cyclohexanone and the like. The alcohol-based solvent may include, e.g., ethyl alcohol, isopropyl alcohol, and the like, and the aprotic solvent may include, e.g., nitriles such as R-CN (wherein R is a C2 to C20 linear, branched, or cyclic hydrocarbon group, a double bond, an aromatic ring, or an ether bond), amides such as dimethylformamide, dioxolanes such as 1,3-dioxolane, sulfolanes, and the like.

In other examples, the non-aqueous organic solvent may be used alone or in combination with one or more of any of the above carbonate-based, ester-based, ether-based, ketone-based, alcohol-based, or aprotic solvents, and when used in combination with one or more of these solvents, a mixing ratio may be appropriately adjusted according to the desired battery performance.

The carbonate-based solvent may be prepared by mixing a cyclic carbonate and a chain carbonate. The cyclic carbonate and chain carbonate may be mixed together in a volume ratio of about 5:95 to about 50:50. When the mixture is used as an electrolyte, the mixture may have enhanced performance.

For example, ethylene carbonate (EC) may be used as the cyclic carbonate, and ethylmethyl carbonate (EMC) and dimethyl carbonate (DMC) may be used as the chain carbonate.

In other examples, the non-aqueous organic solvent may include a carbonate-based solvent in which ethylene carbonate (EC), ethylmethyl carbonate (EMC), and dimethyl carbonate (DMC) are mixed. For example, the carbonate-based solvent in which ethylene carbonate (EC), ethylmethyl carbonate (EMC), and dimethyl carbonate (DMC) may be mixed is mixed in a volume ratio of EC:EMC:DMC = about 1:0.5:5 to about 5:3:10, which may improve performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based solvent may be or include an aromatic hydrocarbon-based compound of Chemical Formula 3.

[Chemical Formula 3]

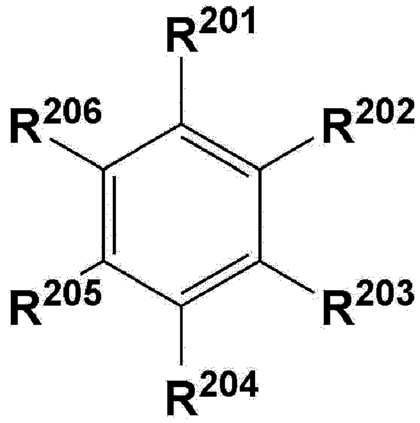

In Chemical Formula 3, $R^{201}$ to $R^{206}$ may be the same or different from each other and are selected from hydrogen, a halogen, a C1 to C10 alkyl group, a haloalkyl group, or a combination thereof.

Examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

In order to improve battery lifecycle, the electrolyte may further include vinylene carbonate, vinyl ethylene carbonate, or an ethylene carbonate-based compound of Chemical Formula 4 as a lifecycle improving additive.

[Chemical Formula 4]

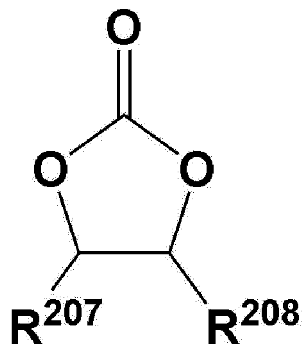

In Chemical Formula 4, $R^{207}$ and $R^{208}$ may be the same or different and are selected from hydrogen, a halogen, a cyano group (CN), a nitro group ($NO_2$), or a C1 to C5 fluoroalkyl group, and at least one of $R^{207}$ and $R^{208}$ is a halogen, a cyano group (CN), a nitro group ($NO_2$), or a C1 to C5 fluoroalkyl group, and $R^{207}$ and $R^{208}$ are not both hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving lifecycle may be used within an appropriate range.

The lithium salt dissolved in the non-aqueous organic solvent supplies lithium ions in the battery, enables the basic operation of a rechargeable lithium battery, and improves transportation of the lithium ions between positive and negative electrodes. Examples of the lithium salt may include at least one selected from $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide:

LiFSI), $LiC_4F_9SO_3$, $LiClO_4$, $LiAlO_2$, $LiAlCl_4$, $LiN(C_mF_{2m+1}SO_2)(C_nF_{2n+1}SO_2)$, wherein, m and n are natural numbers, for example an integer of 1 to 20, LiCl, LiI, and $LiB(C_2O_4)_2$ (lithium bis(oxalato) borate: LiBOB). The lithium salt may be used in a concentration ranging from about 0.1 M to about 2.0 M. When the lithium salt is included at the above concentration range, an electrolyte may have desired or advantageous performance and lithium ion mobility due to improved electrolyte conductivity and viscosity.

A rechargeable lithium battery includes a positive electrode having a positive electrode active material; a negative electrode having a negative electrode active material; and the aforementioned electrolyte.

The positive electrode may include a positive electrode current collector and a positive electrode active material layer on the positive electrode current collector, and the positive electrode active material layer may include a positive electrode active material.

The positive electrode active material may include, e.g., lithiated intercalation compounds that reversibly intercalate and de-intercalate lithium ions.

For example, at least one composite oxide of lithium and a metal of cobalt, manganese, nickel, or a combination thereof may be used.

The composite oxide having a coating layer on the surface thereof may be used, or a mixture of the composite oxide and the composite oxide having a coating layer may be used. The coating layer may include a coating element compound selected from an oxide of the coating element, a hydroxide of the coating element, an oxyhydroxide of the coating element, an oxycarbonate of the coating element, or a hydroxycarbonate of the coating element. The compound for the coating layer may be either amorphous or crystalline. The coating element included in the coating layer may be or include Mg, Al, Co, K, Na, Ca, Si, Ti, V, Sn, Ge, Ga, B, As, Zr, or a mixture thereof. The coating process may include any conventional processes as long as the process does not cause any side effects on the properties of the positive electrode active material (e.g., spray coating, dipping), and thus a detailed description thereof is omitted.

Specifically, the positive electrode active material may include a lithium nickel-based composite oxide represented by Chemical Formula 1 below:

[Chemical Formula 1] $Li_{a1}Ni_{x1}M^1_{y1}M^2_{z1}O_{2-b1}X_{b1}$

In Chemical Formula 1, $0.9 \leq a1 \leq 1.2$, $0.7 \leq x1 \leq 1$, $0 \leq y1 \leq 0.2$, $0 \leq z1 \leq 0.2$, $0.9 \leq x1+y1+z1 \leq 1.1$, and $0 \leq b1 \leq 0.1$; $M^1$ and $M^2$ are each independently one or more element selected from Al, B, Ba, Ca, Ce, Co, Cr, Cu, Fe, Mg, Mn, Mo, Nb, Si, Sr, Ti, V, W, and Zr; and X is one or more element selected from F, P, and S.

In Chemical Formula 1, $0.75 \leq x1 \leq 1$, $0 \leq y1 \leq 0.18$, and $0 \leq z1 \leq 0.18$; $0.85 \leq x1 \leq 1$, $0 \leq y1 \leq 0.15$, and $0 \leq z1 \leq 0.15$; or $0.9 \leq x1 \leq 1$, $0 \leq y1 \leq 0.1$, and $0 \leq z1 \leq 0.1$.

For example, the positive electrode active material may include a lithium nickel-based composite oxide represented by Chemical Formula 2 below. The compound represented by Chemical Formula 2 may be referred to as a lithium nickel cobalt-based complex oxide:

[Chemical Formula 2] $Li_{a2}Ni_{x2}CO_{y2}M^3_{z2}O_{2-b2}X_{b2}$

In Chemical Formula 2, $0.9 \leq a2 \leq 1.8$, $0.7 \leq x2 < 1$, $0 < y2 \leq 0.2$, $0 \leq z2 \leq 0.2$, $0.9 \leq x2+y2+z2 \leq 1.1$, and $0 \leq b2 \leq 0.1$, $M^3$ is one or more element selected from Al, B, Ba, Ca, Ce, Cr, Fe, Mg, Mn, Mo, Nb, Si, Sr, Ti, V, W, and Zr, and X is one or more element selected from F, P, and S.

In Chemical Formula 2, $0.75 \leq x2 \leq 0.99$, $0 \leq y2 \leq 0.15$, and $0 \leq z2 \leq 0.15$; $0.85 \leq x2 \leq 0.99$, $0.01 \leq y2 \leq 0.15$, and $0.01 \leq z2 \leq 0.15$; or $0.9 \leq x2 \leq 0.99$, $0.01 \leq y2 \leq 0.1$, and $0.01 \leq z2 \leq 0.1$.

As an example, the positive electrode active material may include a lithium nickel-based composite oxide represented by Chemical Formula 3 below. The compound of Chemical Formula 3 may be referred to as lithium nickel-cobalt-aluminum oxide or lithium nickel-cobalt-manganese oxide.

[Chemical Formula 3] $Li_{a3}Ni_{x3}CO_{y3}M^4_{z3}M^5_{w3}O_{2-b3}X_{b3}$

In Chemical Formula 3, $0.9 \leq a3 \leq 1.8$, $0.7 \leq x3 \leq 0.98$, $0.01 \leq y3 \leq 0.19$, $0.01 \leq z3 \leq 0.19$, $0 \leq w3 \leq 0.19$, $0.9 \leq x3+y3+z3+w3 \leq 1.1$, and $0 \leq b3 \leq 0.1$, $M^4$ is one or more element selected from Al, and Mn, $M^5$ is one or more element selected from B, Ba, Ca, Ce, Cr, Fe, Mg, Mo, Nb, Si, Sr, Ti, V, W, and Zr, and X is one or more element selected from F, P, and S.

In Chemical Formula 3, $0.75 \leq x3 \leq 0.98$, $0 \leq y3 \leq 0.16$, and $0 \leq z3 \leq 0.16$; $0.85 \leq x3 \leq 0.98$, $0.01 \leq y3 \leq 0.14$, $0.01 \leq z3 \leq 0.14$, and $0 \leq w3 \leq 0.14$; or $0.9 \leq x3 \leq 0.98$, $0.01 \leq y3 \leq 0.09$, $0.01 \leq z3 \leq 0.09$, and $0 \leq w3 \leq 0.09$

As an example, the positive electrode active material may include a lithium nickel-based composite oxide represented by Chemical Formula 4 below. The compound of Chemical Formula 4 may be referred to be a cobalt-free lithium nickel-manganese oxide.

[Chemical Formula 4] $Li_{a4}Ni_{x4}Mn_{y4}M^6_{z4}O_{2-b4}X_{b4}$

In Chemical Formula 4, $0.9 \le a2 \le 1.8$, $0.7 \le x4 \le 1$, $0 < y4 \le 0.2$, $0 \le z4 \le 0.2$, $0.9 \le x4+y4+z4 \le 1.1$, and $0 \le b4 \le 0.1$, $M^6$ is one or more element selected from Al, B, Ba, Ca, Ce, Cr, Fe, Mg, Mo, Nb, Si, Sr, Ti, V, W, and Zr, and X is one or more element selected from F, P, and S.

In the positive electrode active material according to some example embodiments, the first positive electrode active material may be included in an amount of about 50 wt% to about 90 wt%, and the second positive electrode active material may be included in an amount of about 10 wt% to about 50 wt%, based on a total amount of the first positive electrode active material and the second positive electrode active material. For example, the first positive electrode active material may be included in an amount of about 60 wt% to about 90 wt%, or about 70 wt% to about 90 wt%, and the second positive electrode active material may be included in an amount of about 10 wt% to about 40 wt%, or about 10 wt% to about 30 wt%. When the content ratio of the first and second positive electrode active materials is within the above-discussed ranges, the positive electrode active material including the same can achieve improved or high capacity, improved mixture density, and exhibit improved or high energy density.

In the positive electrode of some example embodiments, a content of the positive electrode active material may be about 90 wt% to about 98 wt%, about 50 wt% to about 99 wt%, about 60 wt% to about 99 wt%, about 70 wt% to 99 wt%, about 80 wt% to about 99 wt%, or about 90 wt% to about 99 wt% based on a total weight of the positive electrode active material layer.

In some example embodiments of the present invention, the positive electrode active material layer may also include a conductive material and a binder. In this case, the content of the conductive material and of the binder may be about 1.0 wt% to about 5.0 wt%, based on a total weight of the positive electrode active material layer.

The conductive material is used to impart conductivity to the negative electrode, and any electrically conductive material may be used as a conductive material unless the conductive material causes a chemical change in the battery. Examples of the conductive material may include a carbon-based material such as natural graphite, artificial graphite, carbon black, acetylene black, Ketjen black, carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples of the binder may be or include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include aluminum (Al), but is not limited thereto.

The negative electrode includes a negative electrode current collector and a negative electrode active material layer including a negative electrode active material formed on the negative electrode current collector.

The negative electrode active material may be or include a material that reversibly intercalates/de-intercalates lithium ions, a lithium metal, a lithium metal alloy, a material capable of doping and de-doping lithium, or a transition metal oxide.

The material that reversibly intercalates/de-intercalates lithium ions includes carbon materials. The carbon material may be or include any generally-used carbon-based negative electrode active material in a rechargeable lithium battery. Examples of the carbon material include crystalline carbon, amorphous carbon, or a combination thereof. The crystalline carbon may be non-shaped, or sheet, flake, spherical, or fiber shaped natural graphite or artificial graphite. The amorphous carbon may be or include a soft carbon, a hard carbon, a mesophase pitch carbonized product, fired coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and de-doping lithium may include Si, $SiO_x$ ($0 < x < 2$), a Si-Q alloy (wherein Q is selected from an alkali metal, an alkaline-earth metal, a Group 13 element, a Group 14 element, a Group 15 element, a Group 16 element, a transition metal, a rare earth element, or a combination thereof, and not Si), Sn, $SnO_2$, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and the like. At least one of them may be mixed with $SiO_2$.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide may be or include a vanadium oxide, a lithium vanadium oxide, and the like.

In some example embodiments, the negative electrode active material may include at least one of graphite and a Si-C composite.

The Si-C composite may include a core including Si particles and amorphous carbon, and for example, the Si particles may include at least one of Si, $SiO_k$ ($0 < k \leq 2$), and an Si alloy.

For example, the Si-C composite may include a core including Si particles and amorphous carbon.

The central portion of the core may include pores, and a radius of the central portion may be about 30% to about 50% of a radius of the Si-C composite.

The Si particles may have an average particle diameter of about 10 nm to about 200 nm.

As used herein, the average particle diameter of the Si particle may be a particle size (D50) at a volume ratio of 50% in a cumulative size-distribution curve.

When the average particle diameter of the Si particle is within the above range, volume expansion occurring during charging and discharging of the battery may be suppressed or reduced, and disconnection of a conductive path due to particle crushing during charging and discharging may be reduced or prevented.

The Si particles may be included in an amount of about 1 wt% to about 60 wt%, for example, about 3 wt% to about 60 wt%, based on a total weight of the SiC composite.

The central portion may not include amorphous carbon, and the amorphous carbon may be present only in the surface portion of the negative electrode active material.

Herein, the surface portion indicates a region from the central portion of the negative electrode active material to the outermost surface of the negative electrode active material.

In addition, the Si particles are substantially uniformly included over the negative electrode active material, that is, present at a substantially uniform concentration in the central portion and the surface portion thereof.

The amorphous carbon may be or include soft carbon, hard carbon, mesophase pitch carbonized product, calcined coke, or a combination thereof.

The negative electrode active material may further include crystalline carbon.

When the negative electrode active material includes a Si-C composite and crystalline carbon together, the Si-C composite and crystalline carbon may be included in the form of a mixture, and in this case, the Si-C composite and crystalline carbon may be included in a weight ratio of about 1:99 to about 50:50. More specifically, the Si-C composite and crystalline carbon may be included in a weight ratio of about 3 : 97 to about 20 : 80 or about 5 : 95 to about 20 : 80.

The crystalline carbon may be or include, for example, graphite, and more specifically natural graphite, artificial graphite, or a mixture thereof.

The crystalline carbon may have an average particle diameter of about 5 $\mu$m to about 30 $\mu$m.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on the total weight of the negative electrode active material layer.

In some example embodiments, the negative electrode active material layer may include a binder, and optionally a conductive material. In the negative electrode active material layer, the amount of the binder may be about 1 wt% to about 5 wt% based on a total weight of the negative electrode active material layer. When it further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be or include a non-water-soluble binder, a water-soluble binder, or a combination thereof.

The non-water-soluble binder may be or include polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be or include a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, or a combination thereof. The polymer resin binder may be selected from polytetrafluoroethylene, ethylenepropylene copolymer, polyethyleneoxide, polyvinylpyrrolidone, polyepichlorohydrin, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, or a combination thereof.

When the water-soluble binder is used as the negative electrode binder, a cellulose-based compound may be further used to provide viscosity as a thickener. The cellulose-based compound includes one or more of carboxyl methyl cellulose, hydroxypropylmethyl cellulose, methyl cellulose, or alkali metal salts thereof. The alkali metal may be or include Na, K, or Li. Such a thickener may be included in an amount of 0.1 parts by weight to 3 parts by weight based on 100 parts by weight of the negative electrode active material.

In various examples, the conductive material may be included to provide electrode conductivity and any electrically conductive material may be used as a conductive material unless it causes a chemical change. Examples thereof may be a carbon-based material such as natural graphite, artificial graphite, carbon black, acetylene black, Ketjen black, carbon fiber and the like; a metal-based material such as a metal powder or a metal fiber of copper, nickel, aluminum, silver, and the like; a conductive polymer such as a polyphenylene derivative and the like, or a mixture thereof.

The negative electrode current collector may be selected from a copper foil, a nickel foil, a stainless steel foil, a titanium foil, a nickel foam, a copper foam, a polymer substrate coated with a conductive metal, or a combination thereof.

The rechargeable lithium battery may further include a separator between the negative electrode and the positive electrode, depending on a type of the rechargeable lithium battery. This separator may be or include a porous substrate; or may be or include a composite porous substrate.

The porous substrate may be or include a substrate including pores, and lithium ions may move through the pores. The porous substrate may be or include for example polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be or include, for example, at least one of a heat-resistant layer and an adhesive layer from the viewpoint of enabling additional function. For example, the heat-resistant layer may include a heat-resistant resin and optionally a filler.

In other examples, the adhesive layer may include an adhesive resin and optionally a filler.

The filler may be or include an organic filler or an inorganic filler.

Referring to FIG. 1, a rechargeable lithium battery 100 according to some example embodiments includes a battery cell including a negative electrode 112, a positive electrode 114 facing the negative electrode 112, a separator 113 between the negative electrode 112 and the positive electrode 114, and an electrolyte (not shown) impregnating the negative electrode 112, positive electrode 114, and separator 113. A battery case 120 houses the battery cell, and a sealing member 140 is configured to seal the battery case 120.

Hereinafter, examples and comparative examples of the present invention will be described. The following example is only an example of the present invention, and the present inventive concepts are not limited to the following examples.

## Preparation of Electrolyte for Rechargeable Lithium Battery

### Preparation Example 1

As a non-aqueous organic solvent, a carbonate-based solvent is prepared by mixing ethylene carbonate (EC): ethylmethyl carbonate (EMC): dimethyl carbonate (DMC) = 20:20:40 in a volume ratio.

To the non-aqueous organic solvent, a 1.0 M lithium salt ($LiPF_6$) is added, and 0.15 wt% of a potassium imide salt (KFSI) as an additive is subsequently added thereto to obtain an electrolyte for a rechargeable lithium battery.

In this disclosure, the content (wt%) of the potassium imide salt is indicative of the content (wt%) of the potassium imide salt based on 100 wt% of the electrolyte for a rechargeable lithium battery.

### Preparation Example 2

An electrolyte for a rechargeable lithium battery is manufactured in the same manner as in Preparation Example 1, with the difference that 0.2 wt% of the potassium imide salt (KFSI) is used as an additive instead of the 0.15 wt% in Preparation Example 1.

### Preparation Example 3

An electrolyte for a rechargeable lithium battery is manufactured in the same manner as in Preparation Example 1, with the difference that 0.3 wt% of the potassium imide salt (KFSI) is used as an additive instead of the 0.15 wt% in Preparation Example 1.

### Preparation Example 4

An electrolyte for a rechargeable lithium battery is manufactured in the same manner as in Preparation Example 1, with the difference that 0.5 wt% of the potassium imide salt (KFSI) is used as an additive instead of the 0.15 wt% in Preparation Example 1.

**Preparation Example 5**

An electrolyte for a rechargeable lithium battery is manufactured in the same manner as in Preparation Example 1, with the difference that 1.0 wt% of the potassium imide salt (KFSI) is used as an additive instead of the 0.15 wt% in Preparation Example 1.

**Preparation Example 6**

An electrolyte for a rechargeable lithium battery is manufactured in the same manner as in Preparation Example 1, with the difference that 0.3 wt% of the potassium imide salt (KTFSI) is used as an additive instead of the 0.15 wt% KFSI in Preparation Example 1.

**Preparation Example 7**

An electrolyte for a rechargeable lithium battery is manufactured in the same manner as in Preparation Example 1, with the difference that 0.3 wt% of the potassium imide salt (KFTFSI) is used as an additive instead of the 0.15 wt% KFSI in Preparation Example 1.

**Comparative Preparation Example 1**

An electrolyte for a rechargeable lithium battery is manufactured in the same manner as in Preparation Example 1, with the difference that no additive is used at all unlike in in Preparation Example 1.

**Comparative Preparation Example 2**

An electrolyte for a rechargeable lithium battery is manufactured in the same manner as in Preparation Example 1, with the difference that 0.15 wt% of a potassium phosphate salt ($KPF_6$) instead of KFSI is used as an additive.

**Manufacture of Rechargeable Lithium Battery Cells**

**Example 1**

(1) Manufacture of the Positive Electrode

$LiNi_{0.88}Co_{0.07}Al_{00.5}O_2$ as a positive electrode active material, polyvinylidene fluoride as a binder, and Ketjen black as a conductive material are mixed respectively in a weight ratio of about 97:2:1, and subsequently dispersed in N-methyl pyrrolidone to prepare a positive electrode active material slurry.

The positive electrode active material slurry is coated on an Al foil about 14 μm-thick, dried at about 110 °C, and pressed to manufacture the positive electrode.

(2-1) Manufacture of the Negative Electrode (Manufacture of Full-cell)

A mixture of artificial graphite and a Si-C composite in a weight ratio of about 93:7 is prepared as a negative electrode active material, and the negative electrode active material, a styrene-butadiene rubber binder, and carboxyl methyl cellulose in a weight ratio of about 97:1:2 are dispersed in distilled water to prepare a negative electrode active material slurry.

The Si-C composite includes a core including artificial graphite and silicon particles, and a coal pitch coated on the surface of the core.

The negative electrode active material slurry is coated on a Cu foil about 10 μm-thick, dried at about 100 °C, and pressed to manufacture a negative electrode.

(2-2) Manufacture of the Negative Electrode (Manufacture of Half-cell)

As a counter electrode, which is a negative electrode, a Li metal about 10 μm-thick is used.

(3) Manufacture of Rechargeable Lithium Battery Cells

The manufactured positive and negative electrodes are assembled with a polyethylene separator about 25 μm-

thick to manufacture an electrode assembly, and the electrolyte for a rechargeable lithium battery according to Preparation Example 1 is injected thereinto to manufacture the rechargeable lithium battery cell.

**Example 2**

A rechargeable lithium battery cell is manufactured in the same manner as in Example 1, with the difference that the electrolyte for a rechargeable lithium battery according to Preparation Example 2 is injected thereinto.

**Example 3**

A rechargeable lithium battery cell is manufactured in the same manner as in Example 1, with the difference that the electrolyte for a rechargeable lithium battery according to Preparation Example 3 is injected thereinto.

**Example 4**

A rechargeable lithium battery cell is manufactured in the same manner as in Example 1, with the difference that the electrolyte for a rechargeable lithium battery according to Preparation Example 4 is injected thereinto.

**Example 5**

A rechargeable lithium battery cell is manufactured in the same manner as in Example 1, with the difference that the electrolyte for a rechargeable lithium battery according to Preparation Example 5 is injected thereinto.

**Example 6**

A rechargeable lithium battery cell is manufactured in the same manner as in Example 1, with the difference that the electrolyte for a rechargeable lithium battery according to Preparation Example 6 is injected thereinto.

**Example 7**

A rechargeable lithium battery cell is manufactured in the same manner as in Example 1, with the difference that the electrolyte for a rechargeable lithium battery according to Preparation Example 7 is injected thereinto.

**Comparative Example 1**

A rechargeable lithium battery cell is manufactured in the same manner as in Example 1, with the difference that the electrolyte for a rechargeable lithium battery according to Comparative Preparation Example 1 is injected thereinto.

**Comparative Example 2**

A rechargeable lithium battery cell is manufactured in the same manner as in Example 1, with the difference that the electrolyte for a rechargeable lithium battery according to Comparative Preparation Example 2 is injected thereinto.

**Evaluation 1: Evaluation of Precipitates at the Interface between Negative Electrode and Electrolyte**

The rechargeable lithium battery half-cells of Examples 1 to 7 and Comparative Examples 1 to 2 are constant-current (CC)-charged at a 1.5 C charging rate to a state-of-charge (SOC) of 80%, and discharged at a 0.1 C discharging rate, and a lithium dendrite precipitation amount is subsequently measured according to Equation 1 below. The results are shown in Table 1:

Lithium dendrite precipitation amount (%) = 100 * (precipitation capacity in a discharge plateau section under the above conditions / SOC80 charge capacity)

Table 1

| | Lithium dendrite precipitation amount [%] |
|---|---|
| Comparative Example 1 | 1.53 |
| Comparative Example 2 | 1.34 |
| Example 1 | 1.24 |
| Example 2 | 1.22 |
| Example 3 | 1.11 |
| Example 4 | 0.98 |
| Example 5 | 0.95 |
| Example 6 | 1.15 |
| Example 7 | 0.85 |

Referring to Table 1, Examples 1 to 7, compared with Comparative Examples 1 and 2, exhibit a suppressed or reduced lithium dendrite precipitation on the interface of the negative electrode with the electrolyte. Such suppression or reduction contributes to high-rate charging.

**Evaluation 2: Evaluation of Direct Current Resistance Increase Rate during High-rate Charging**

The rechargeable lithium battery full-cells according to Examples 1 to 6 and Comparative Examples 1 to 4 are evaluated with respect to a resistance increase rate under the following conditions, and the results are shown in Table 2.
The cells are constant current-charged to 4.2 V at a current charging rate of 1.5 C at 25 °C. Subsequently, the cells were 120 cycles (120$^{th}$ cycle) constant current-discharged to 2.8 V at a current discharging rate of 1 C. In some or all the charge and discharge cycles, a pause of 10 minutes is set after each charge/discharge cycle.
After performing the 120 cycles' charges and discharges, the capacity retention rate (%)is calculated according to Equation 2.

[Equation 2]

Capacity retention rate = (capacity at 120th cycle/initial capacity) X 100%

In addition, after the 120 cycles' charges and discharges, the direct resistance current internal resistance (DC-IR) is measured to obtain a DC-IR increase rate (%) according to Equation 3.

DC-IR increase rate during high-rate charging = DC-IR (at 120th charge and discharge cycle)/DC-IR(0d.) X 100%

In Equation 3, DC-IR (at the 120$^{th}$ charge and discharge cycle) is DC-IR after the 120$^{th}$ charge and discharge cycle at 25 °C, and DC-IR (0d.) is DC-IR right before the 120$^{th}$ charge and discharge cycle.

Table 2

| | Capacity retention rate after 120 cycles during high-rate charging [%, @25 °C] | resistance increase rate after 120 cycles during high-rate charging [%, @25 °C] |
|---|---|---|
| Comparative Example 1 | 87.8 | 115.9 |
| Comparative Example 2 | 89.8 | 113.7 |
| Example 1 | 90.2 | 113.3 |
| Example 2 | 90.3 | 113.2 |
| Example 3 | 90.9 | 112.8 |

(continued)

| | Capacity retention rate after 120 cycles during high-rate charging [%, @25 °C] | resistance increase rate after 120 cycles during high-rate charging [%, @25 °C] |
|---|---|---|
| Example 4 | 91.2 | 112.5 |
| Example 5 | 91.5 | 110.8 |
| Example 6 | 90.6 | 113.5 |
| Example 7 | 92.0 | 110.5 |

Referring to Table 2, Examples 1 to 7, compared with Comparative Examples 1 and 2, exhibit increased capacity retention and exhibit a suppressed or reduced increase in resistance during the high-rate charging, thereby improving high-rate charging lifecycle.

**<Description of Symbols>**

100: rechargeable lithium battery
112: negative electrode
113: separator
114: positive electrode
120: battery case
140: sealing member

**Claims**

1. An electrolyte for a rechargeable lithium battery, the electrolyte comprising:
a non-aqueous organic solvent, a lithium salt, and a potassium imide salt.

2. The electrolyte of claim 1, wherein:
a content of the potassium imide salt is 0.15 wt% to 1.0 wt% based on 100 wt% of the electrolyte.

3. The electrolyte of claim 2, wherein:
a content of the potassium imide salt is 0.2 wt% to 0.3 wt% based on 100 wt% of the electrolyte.

4. The electrolyte of any one of the preceding claims, wherein:
the potassium imide salt comprises at least one of KFSI (potassium bis(fluorosulfonyl)imide), KTFSI (potassium bis(trifluoromethanesulfonyl)imide), and KFTFSI (potassium (fluorosulfonyl) (trifluoromethanesulfonyl)imide).

5. The electrolyte of any one of the preceding claims, wherein:
the non-aqueous organic solvent comprises at least one of a carbonate-based, ester-based, ether-based, ketone-based, alcohol-based, and an aprotic solvent.

6. The electrolyte of claim 5, wherein:
the non-aqueous organic solvent comprises a carbonate-based solvent in which cyclic carbonate and chain carbonate are mixed in a volume ratio of 5:95 to 50:50.

7. The electrolyte of claim 6, wherein at least one of:

   the cyclic carbonate includes ethylene carbonate (EC), and
   the chain carbonate includes ethylmethyl carbonate (EMC) and dimethyl carbonate (DMC).

8. The electrolyte of any one of the preceding claims, wherein:
the lithium salt comprises at least one of $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ ((lithium bis(fluorosulfonyl)imide: LiFSI), $LiC_4F_9SO_3$, $LiClO_4$, $LiAlO_2$,

$LiAlCl_4$, $LiN(C_mF_{2m+1}SO_2)(C_nF_{2n+1}SO_2)$, wherein, m and n are each independently integers from 1 to 20, LiCl, LiI, and $LiB(C_2O_4)_2$ (lithium bis(oxalato) borate: LiBOB).

**9.** The electrolyte of claim 8, wherein:
a concentration of lithium salt in the electrolyte for a rechargeable lithium battery is in a range of 1.0 M to 2.0 M.

**10.** A rechargeable lithium battery (100), comprising:

a positive electrode (114) including a positive electrode active material;
a negative electrode (112) including a negative electrode active material; and
the electrolyte according to claim 1 in which the positive electrode (114) and the negative electrode (112) are immersed.

**11.** The rechargeable lithium battery (100) of claim 10, wherein:
the positive electrode active material includes a lithium nickel-based composite oxide represented by Chemical Formula 1:

[Chemical Formula 1] $Li_{a1}Ni_{x1}M^1_{y1}M^2_{z1}O_{2-b1}X_{b1}$

wherein, in Chemical Formula 1,
$0.9 \leq a1 \leq 1.2$, $0.7 \leq x1 \leq 1$, $0 \leq y1 \leq 0.2$, $0 \leq z1 \leq 0.2$, $0.9 \leq x1+y1+z1 \leq 1.1$, and $0 \leq b1 \leq 0.1$;
$M^1$ and $M^2$ are each independently one or more element selected from Al, B, Ba, Ca, Ce, Co, Cr, Cu, Fe, Mg, Mn, Mo, Nb, Si, Sr, Ti, V, W, and Zr; and
X is one or more element selected from F, P, and S.

**12.** The rechargeable lithium battery (100) of claim 10 or 11, wherein:
the negative electrode active material includes at least one of graphite and a Si composite.

**13.** The rechargeable lithium battery of claim 12, wherein:
the Si composite comprises a core including Si particles and amorphous carbon.

**14.** The rechargeable lithium battery of claim 13, wherein:
the Si particles comprise at least one of Si-C composite, $SiO_k$ ($0 < k \leq 2$), and an Si alloy.

**15.** The rechargeable lithium battery of claim 13, wherein:
the negative electrode active material further comprises crystalline carbon.

【FIG. 1】

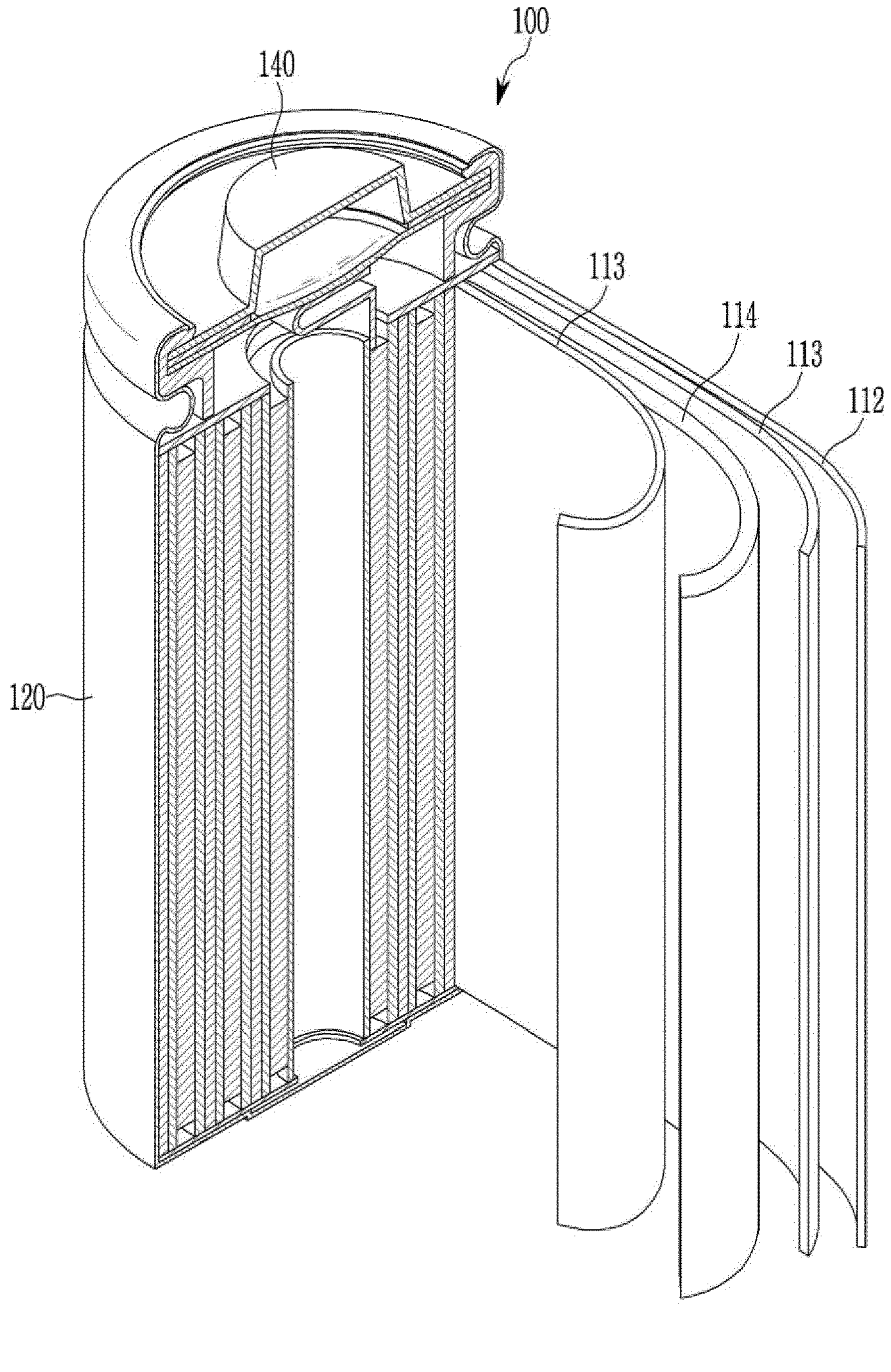

Europäisches Patentamt
European Patent Office
Office européen des brevets

# EUROPEAN SEARCH REPORT

Application Number
EP 24 17 7265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2019/089001 A1 (KIM JAE YOON [KR] ET AL) 21 March 2019 (2019-03-21)<br>* paragraphs [0030], [0057]; claims 1,7,10-14; examples 1-8 *<br>----- | 1-12<br>13-15 | INV.<br>H01M10/0525<br>H01M10/0567<br><br>ADD.<br>H01M4/36<br>H01M4/38<br>H01M4/525<br>H01M10/0569 |
| X<br>Y | US 2021/351438 A1 (XU YANYAN [CN] ET AL) 11 November 2021 (2021-11-11)<br>* paragraphs [0067] - [0071], [0084], [0092], [0093] *<br>----- | 1-12<br>13-15 | |
| Y | WO 2022/220474 A1 (SAMSUNG SDI CO LTD [KR]) 20 October 2022 (2022-10-20)<br>* claims 9-11 *<br>----- | 13-15 | |
| | | | TECHNICAL FIELDS SEARCHED (IPC) |
| | | | H01M |

The present search report has been drawn up for all claims

2

| Place of search | Date of completion of the search | Examiner |
|---|---|---|
| The Hague | 13 August 2024 | Schwake, Andree |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 7265

This annex lists the patent family members relating to the patent documents cited in the above-mentioned European search report. The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| US 2019089001 A1 | 21-03-2019 | NONE | |
| US 2021351438 A1 | 11-11-2021 | BR 112022022488 A2 | 13-12-2022 |
| | | EP 3933996 A1 | 05-01-2022 |
| | | US 2021351438 A1 | 11-11-2021 |
| | | WO 2021223181 A1 | 11-11-2021 |
| WO 2022220474 A1 | 20-10-2022 | CN 116472631 A | 21-07-2023 |
| | | EP 4210143 A1 | 12-07-2023 |
| | | KR 20230175176 A | 29-12-2023 |
| | | US 2024047746 A1 | 08-02-2024 |
| | | WO 2022220474 A1 | 20-10-2022 |

EPO FORM P0459

For more details about this annex : see Official Journal of the European Patent Office, No. 12/82